# EUROPEAN PATENT SPECIFICATION

(11) **EP 3 263 969 B1**
(45) Date of publication and mention of the grant of the patent: **24.06.2020**
(21) Application number: 16176938.5
(22) Date of filing: 29.06.2016
(51) Int. Cl.: F17C 5/06, F17C 7/02, F17C 7/04

(54) **COMPRESSED GAS DISPENSING**
DRUCKGASAUSGABE
DISTRIBUTION DE GAZ COMPRIMÉ

(43) Date of publication of application: 03.01.2018
(73) Proprietor: AIR PRODUCTS AND CHEMICALS, INC., Allentown, PA 18195-1501 (US)
(72) Inventor: Bruneau, Erwan Louis Joseph, 75009 Paris (FR); Schnitzeler, Franciscus Joannes Marcel, 3454 RK De Meern (NL); Ramos Torres, Kelly Daniela, Reigate, Surrey RH2 0JN (GB)
(74) Representative: SSM Sandmair

(56) References cited:
- EP-A1- 3 249 282
- US-A1- 2010 193 070
- "Compressed Gas Dispensing", IP.COM JOURNAL, IP.COM INC., WEST HENRIETTA, NY, US, 24 May 2016 (2016-05-24), XP013171679, ISSN: 1533-0001
- "Cascade filling system", Wikipedia.org , 17 December 2015 (2015-12-17), XP002764884, Retrieved from the Internet: URL:https://en.wikipedia.org/w/index.php?t itle=Cascade_filling_system&oldid=69567069 7 [retrieved on 2016-12-05]

## Description

### BACKGROUND

There is growing interest to use hydrogen as a transportation fuel in cars, buses, trucks, and other vehicles. Hydrogen is generally stored in a fuel tank on-board the vehicles at high pressure. After most of the on-board hydrogen has been depleted, the pressure of the hydrogen in the fuel tank is reduced and the fuel tank must be refueled (refilled to a target pressure) with hydrogen.

Hydrogen may be supplied from high pressure storage vessels and/or liquid storage vessels. The cost of supplying an amount of hydrogen can depend on whether the source is liquid or compressed gas. Industry desires to supply hydrogen to fuel tanks on-board vehicles in a cost effective manner.

Industry desires improved methods and improved equipment for compressed gas dispensing.

Industry desires improved utilization of storage vessels used to transport compressed gas from a supply depot to a dispensing station, thereby reducing the frequency of transport of the compressed gas storage vessels.

Industry desires to reduce the use of compressors at dispensing stations due to required maintenance of compressors and power requirements of compressors.

Industry desires reliable supply of compressed gas at compressed gas dispensing stations.

The present invention may also be useful for dispensing other compressed gases such as natural gas.

### BRIEF SUMMARY

There are several aspects of the invention according to the appended claims.

### BRIEF DESCRIPTION OF SEVERAL VIEWS OF THE DRAWINGS

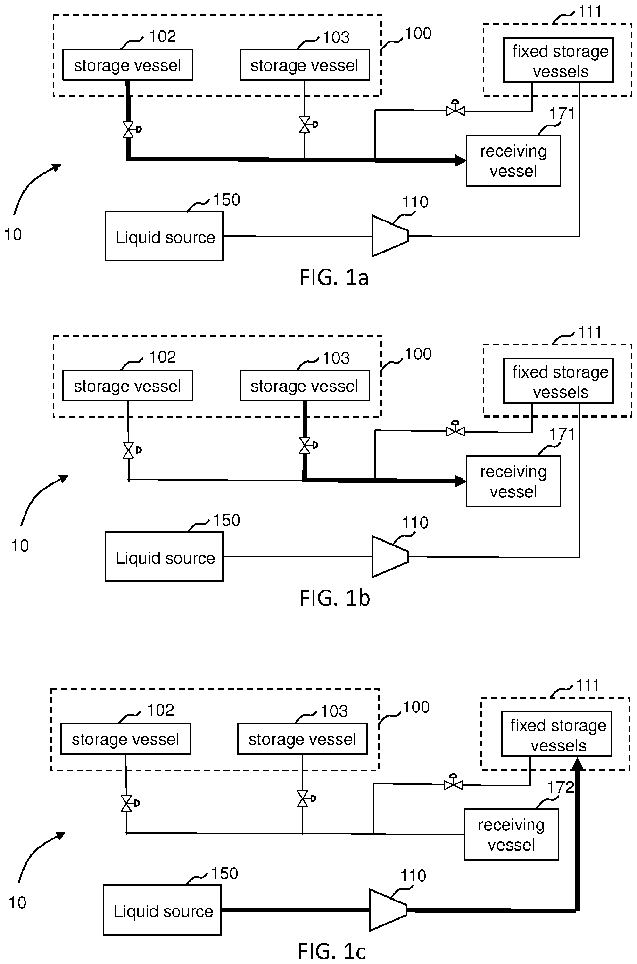

FIGS. 1a-I illustrate steps for the compressed gas dispensing method.

### DETAILED DESCRIPTION OF THE PREFERRED EMBODIMENTS

The present disclosure relates to methods and apparatus for dispensing a compressed gas into a receiving vessel. The compressed gas may be natural gas. The compressed gas may be hydrogen and the receiving vessel may be a hydrogen storage tank of a vehicle such as a car, truck, bus, forklift, or other vehicle. As used herein, the term compressed gas includes gases and supercritical fluids.

The method is described with reference to the figures. The thicker lines denote the path of the compressed gas during the various steps.

The articles "a" and "an" as used herein mean one or more when applied to any feature in embodiments of the present invention described in the specification and claims. The use of "a" and "an" does not limit the meaning to a single feature unless such a limit is specifically stated. The article "the" preceding singular or plural nouns or noun phrases denotes a particular specified feature or particular specified features and may have a singular or plural connotation depending upon the context in which it is used.

The adjective "any" means one, some, or all indiscriminately of whatever quantity.

The term "and/or" placed between a first entity and a second entity includes any of the meanings of (1) only the first entity, (2) only the second entity, and (3) the first entity and the second entity. The term "and/or" placed between the last two entities of a list of 3 or more entities means at least one of the entities in the list including any specific combination of entities in this list. For example, "A, B and/or C" has the same meaning as "A and/or B and/or C" and comprises the following combinations of A, B and C: (1) only A, (2) only B, (3) only C, (4) A and B and not C, (5) A and C and not B, (6) B and C and not A, and (7) A and B and C.

The phrase "at least one of" preceding a list of features or entities means one or more of the features or entities in the list of entities, but not necessarily including at least one of each and every entity specifically listed within the list of entities and not excluding any combinations of entities in the list of entities. For example, "at least one of A, B, or C" (or equivalently "at least one of A, B, and C" or equivalently "at least one of A, B, and/or C") has the same meaning as "A and/or B and/or C" and comprises the following combinations of A, B and C: (1) only A, (2) only B, (3) only C, (4) A and B and not C, (5) A and C and not B, (6) B and C and not A, and (7) A and B and C.

The term "plurality" means "two or more than two."

As used herein, "first," "second," "third," etc. are used to distinguish from among a plurality of steps and/or features, and is not indicative of the total number, or relative position in time and/or space unless expressly stated as such.

As used herein, pressures are gauge pressures unless otherwise specifically stated.

The present method uses the well-known cascade dispensing approach. In cascade dispensing, the compressed gas is dispensed to a receiving vessel from multiple supply vessels in succession, where each succeeding supply vessel has an increasingly higher pressure of the compressed gas contained therein.

Cascade dispensing is described, for example, in US 5,406,988, US 6,779,568, US 6,786,245, US 8,156,970 B2, US 8,453,682 B2, US 8,899,278 B2, and EP2174057B1. Non patent literature IPCOM000246290D published on IP.com on 24-03-2016 relates to a dispensing station and methods for filling a compressed gas to a receiving vessel.

The present method, with its various steps and optional steps, is described in FIGS. 1a-I. FIGS. 1a-I illustrate an exemplary process flow diagram for carrying out the method. The transfer lines and valves shown are only exemplary, and various alternative configurations could be used to carry out the method.

The present method is a method for dispensing compressed gas into a plurality of receiving vessels at a compressed gas dispensing station (10). The plurality of receiving vessels may be fuel tanks on-board various types of transportation vehicles. The compressed gas dispensing station 10 comprises a mobile compressed gas storage device 100, a liquid storage vessel 150, and one or more fixed compressed gas storage vessels 111. The liquid storage vessel 150 may be a fixed liquid storage vessel or a mobile liquid storage vessel.

The terms "mobile" and "fixed" have their normal meaning. A mobile storage vessel is storage vessel that is transported from a (compressed gas and/or liquid) supply depot to the dispensing station 10 and then returned to be recharged after the fluid (compressed gas or liquid) has been sufficiently depleted. A fixed storage vessel is a storage vessel that is fixed at the dispensing station 10 where the fixed storage vessel is not transported to a supply depot during the course of normal operation. A fixed storage vessel is charged from another mobile storage device, which is transported from a supply depot with liquid or compressed gas and offloaded to the fixed storage vessel. A supply depot may be located at a production facility for producing compressed gas and/or liquid, or may be a bulk storage facility. A bulk storage facility may be supplied by pipeline or other means. A supply depot may supply compressed gas and/or liquid to respective mobile storage devices.

The compressed gas dispensing station 10 is capable of having both compressed gas storage and liquid storage available. Dispensing of compressed gas sourced from the high pressure mobile compressed gas storage device 100 or sourced from the liquid storage vessel 150 can be decided based on economics and availability of the stored product in liquid or compressed gas form.

In case the liquid in the liquid storage vessel 150 is higher cost than the compressed gas in the mobile compressed gas storage device, the dispensing station 10 may preferentially dispense the compressed gas from the mobile compressed gas storage device 100. In case the compressed gas in the mobile compressed gas storage device 100 becomes depleted, the dispensing station 10 may dispense compressed gas sourced from the liquid storage vessel 150.

The liquid storage vessel 150 may be any suitable storage vessel for storing the desired product, for example, hydrogen. Storage vessels for storing liquid hydrogen are well-known. The liquid storage vessel 150 may be a fixed liquid storage vessel where liquid from a supply trailer is off-loaded to the fixed liquid storage vessel. The liquid storage vessel 150 may be mobile liquid storage vessel mounted on a trailer where the mobile liquid storage vessel itself is transported back and forth between a supply depot and the dispensing station 10.

The mobile compressed gas storage device 100 comprises a plurality of storage vessels 102, 103. While only two are shown, the plurality of storage vessels 102, 103 may include any desired number of high pressure storage vessels. The pressure of compressed gas contained within each of the plurality of storage vessels 102, 103 can be the same as one another or different from one another. The high pressure storage vessels 102, 103 may have a maximum pressure rating of, for example, 50 MPa or 90 MPa. The mobile compressed gas storage device 100 is mobile, meaning that the mobile compressed gas storage device 100 may be filled at a compressed gas supply depot, brought to the compressed gas dispensing station 10, used as a source of compressed gas at the compressed gas dispensing station 10, and after the compressed gas is depleted to a selected depletion level, returned again to the compressed gas supply depot to be recharged with compressed gas. The use of storage vessels with high pressure compressed gas onboard a mobile compressed gas storage device provides the benefit of reducing the reliance on a gas compressor at the dispensing station and reducing the associated power requirements of the gas compressor at the dispensing station.

The mobile compressed gas storage device 100 may be designed and configured to be readily swapped out with another mobile compressed gas storage device as described in Patent Application No. EP16170898 and IP.com publication IPCOM000246290D, "Compressed Gas Dispensing," published 24 May 2016. The mobile compressed gas storage device 100 and dispensing station 10 may be configured to minimize the number of high pressure connections between the mobile compressed gas storage device 100 and the dispensing station 10 as discussed in EP16170898 and IPCOM000246290D.

The dispensing station 10 may be operated using more than one mobile compressed gas storage device 100 at a time and when cascade dispensing to a receiving vessel, may withdraw from more than one mobile compressed gas storage device when dispensing to the receiving vessel as described in US 8,453,682.

The mobile compressed gas storage device 100 arrives at the compressed gas dispensing station 10 charged with compressed gas.

The one or more fixed compressed gas storage vessels 111 may include any desired number of high pressure storage vessels. The pressure of compressed gas contained within each of the one or more fixed storage vessels 111 can be the same as one another or different from one another. The one or more fixed compressed gas storage vessels may have a maximum pressure rating of, for example 50 MPa or 90 MPa.

The compressed gas dispensing station 10 also comprises a fluid mover 110, which can be a pump or compressor. The fluid mover may be capable of pumping liquid, gas, and two-phase mixtures of liquid and gas from the liquid source to the one or more fixed compressed gas storage vessels 111. US 5,243,821 discloses a suitable fluid mover. A suitable cryogenic hydrogen compressor system is available commercially from Air Products and Chemicals, Inc. (cf. http://www.airproducts.com/microsite/ 2013_hydrogen_support/33969_cryogenic_hydrogen_compressor_ds.pdf). Various models (CHC-1000, CHC-3000, CHC-6000, CHC-7000 and CHC-10000) are available depending on the required flow and pressure ratings.

The method comprises operatively connecting a first receiving vessel 171 of the plurality of receiving vessels to the compressed gas station 10. Suitable nozzles and receivers for connecting receiving vessels and compressed gas stations are well-known in the hydrogen dispensing art. When the first receiving vessel 171 is operatively connected to the compressed gas dispensing station 10, the first receiving vessel 171 contains compressed gas at an initial pressure.

As shown in FIG. 1a, the method comprises transferring a first quantity of compressed gas from a first storage vessel 102 of the plurality of storage vessels on the mobile compressed gas storage device 100 to the first receiving vessel 171 of the plurality of receiving vessels. The first quantity of compressed gas is transferred using a pressure difference between the compressed gas in the first storage vessel 102 and the compressed gas in the first receiving vessel 171 to transfer the first quantity of compressed gas without the use of a compressor. The transfer of the compressed gas may continue until the pressure difference between the two vessels is decreased to a desired amount.

As per the cascade dispensing technique, as shown in FIG. 1b, subsequent to the transfer of the first quantity of compressed gas, the method comprises transferring a second quantity of compressed gas from a second storage vessel 103 of the plurality of storage vessels on the mobile compressed gas storage device 100 to the first receiving vessel 171. The second storage vessel 103 at the beginning of dispensing to the first receiving vessel 171, contains compressed gas at a higher pressure than the first storage vessel 102 at the end of dispensing to the first receiving vessel 171. The second quantity of compressed gas is transferred using a pressure difference between the compressed gas in the second storage vessel 103 and the compressed gas in the first receiving vessel 171 to transfer the second quantity of compressed gas without the use of a compressor. The transfer of the compressed gas may continue until the pressure difference between the two vessels is decreased to a desired amount.

The dispensing method may proceed by dispensing additional compressed gas from the mobile compressed gas storage device to the first receiving vessel 171 with corresponding steps using other storage vessels of the plurality of storage vessels on the mobile compressed gas storage device 100. Dispensing using the cascade filling technique may use any number of the plurality of storage vessels of the mobile compressed gas storage device 100. Compressed gas is transferred to the first receiving vessel 171 from only the mobile compressed gas storage device 100 to increase the pressure of the compressed gas in the first receiving vessel 171 from the initial pressure to a target pressure for the first receiving vessel 171; the first receiving vessel 171 is refilled to a target pressure using only compressed gas from the mobile compressed gas storage device 100. The first receiving vessel 171 may then be disconnected from the compressed gas dispensing station 10.

The dispensing method includes dispensing compressed gas sourced from the liquid storage vessel 150. The method comprises transferring a first quantity of liquid from the liquid storage vessel 150 to the one or more fixed compressed gas storage vessels 111 via the fluid mover 110 as shown in FIG. 1c. The first quantity of liquid forms a third quantity of compressed gas at a pressure greater than 50 MPa or greater than 90 MPa in the one or more fixed compressed gas storage vessels 111.

The fluid mover 110 may advantageously cryogenically pump liquid since the pressure of the liquid is more efficiently increased than gas. Large molar quantities of compressed gas may be formed from pumping liquid with lower cost equipment and lower operating cost than gas. A heat exchanger (not shown) may be used to heat the pumped liquid by heat exchange with ambient air after passing through the fluid mover 110. Technically, the "liquid" leaving the fluid mover may be a supercritical fluid.

The method comprises operatively connecting a second receiving vessel 172 of the plurality of receiving vessels to the compressed gas dispensing station 10.

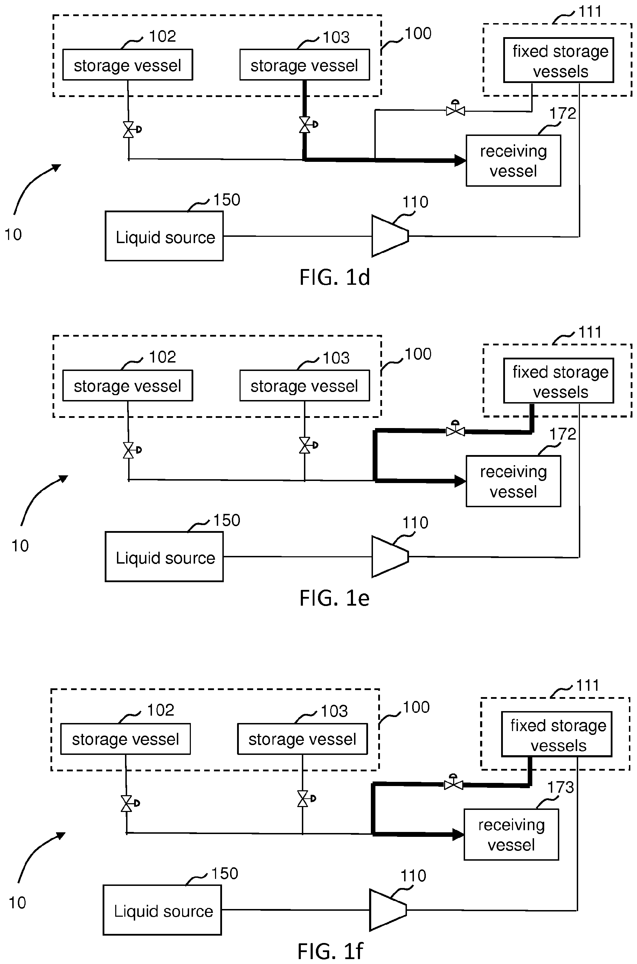

The method comprises transferring a fourth quantity of compressed gas from one or more of the plurality of storage vessels 102, 103 on the mobile compressed gas storage device 100 to the second receiving vessel 172 of the plurality of receiving vessels. FIG. 1d shows the fourth quantity of compressed gas being transferred from the second storage vessel 103 to the second receiving vessel 172. The fourth quantity of compressed gas is transferred using a respective pressure difference between the compressed gas in the one or more of the plurality of storage vessels 102, 103 and the compressed gas in the second receiving vessel 172 to transfer the fourth quantity of compressed gas without the use of a compressor. The transfer of the compressed gas may continue until the pressure difference between the two vessels is decreased to a desired amount. The one or more of the plurality of storage vessels 102, 103 may include one or more of the first storage vessel of the plurality of storage vessels, the second storage vessel of the plurality of storage vessels, and a third storage vessel of the plurality of storage vessels.

As per the cascade dispensing technique, as shown in FIG. 1e, subsequent to the transfer of the fourth quantity of compressed gas, the method comprises transferring a fifth quantity of compressed gas from at least one of the one or more fixed compressed gas storage vessels 111 to the second receiving vessel 172. The fifth quantity of compressed gas may be transferred when the pressure of the compressed gas in each and every one of the total number of storage vessels mounted on the mobile compressed gas storage device 100 is determined to be insufficient to provide a target pressure of compressed gas in the second receiving vessel 172.

The fifth quantity of compressed gas may be dispensed from more than one of the one or more fixed compressed gas storage vessels 111 using the cascade filling technique. The fifth quantity of compressed gas comprises at least a portion of the third quantity of compressed gas; the fifth quantity of compressed gas is formed from liquid from the liquid storage vessel 150. The at least one of the one or more fixed compressed gas storage vessels 111 at the beginning of dispensing to the second receiving vessel 172, contains compressed gas at a higher pressure than the one or more of the plurality of storage vessels on the mobile compressed gas storage device 100 at the end of dispensing to the second receiving vessel 172. The fifth quantity of compressed gas is transferred using a respective pressure difference between the compressed gas in the at least one of the one or more fixed compressed gas storage vessels 111 and the compressed gas in the second receiving vessel 172 to transfer the fifth quantity of compressed gas without the use of a compressor. The transfer of the compressed gas may continue until the pressure difference between the two vessels is decreased to a desired amount.

The dispensing method may proceed by dispensing additional compressed gas from additional storage vessels of the one or more fixed compressed gas storage vessels 111 to the second receiving vessel 172 with corresponding steps using other storage vessels of the one or more fixed compressed gas storage vessels 111.

Compressed gas is transferred to the second receiving vessel 172 from the mobile compressed gas storage device 100 and the one or more fixed compressed gas storage vessels to increase the pressure of the compressed gas in the second receiving vessel 172; the second receiving vessel 172 is refilled to a target pressure using compressed gas from the mobile compressed gas storage device 100 and at least one of the one or more fixed compressed gas storage vessels 111 where the at least one of the one or more fixed compressed gas storage vessels are filled from the liquid storage vessel 150. After refilling the second receiving vessel 172 to a target pressure, the second receiving vessel 172 may be disconnected from the compressed gas dispensing station 10.

Providing high pressure compressed gas from the fixed compressed gas storage vessels 111 provides the advantage of allowing lower pressure compressed gas to be dispensed from the mobile compressed gas storage device 100 to further deplete the compressed gas from the mobile compressed gas storage device 100 while still being able to provide compressed gas up to the desired target pressure to the receiving vessels. More compressed gas can be taken from the mobile compressed gas storage device 100 before the mobile compressed gas storage device 100 needs to be transported to the compressed gas supply depot to be recharged with compressed gas.

The method comprises operatively connecting a third receiving vessel 173 of the plurality of receiving vessels to the compressed gas dispensing station 10. When the third receiving vessel 173 is operatively connected to the compressed gas dispensing station 10, the third receiving vessel 173 contains compressed gas at an initial pressure.

The method comprises transferring a sixth quantity of the compressed gas from the at least one or another of the one or more fixed compressed gas storage vessels 111 to the third receiving vessel 173 of the plurality of receiving vessels. The sixth quantity of compressed gas may be dispensed from more than one of the one or more fixed compressed gas storage vessels 111 using the cascade filling technique. FIG. 1f shows the sixth quantity of compressed gas being transferred from the one or more fixed compressed gas storage vessels 111 to the third receiving vessel 173. The sixth quantity of compressed gas is transferred using a respective pressure difference between the compressed gas in the at least one or the other of the one or more fixed compressed gas storage vessels 111 and the compressed gas in the third receiving vessel 173 to transfer the sixth quantity of compressed gas without the use of a compressor. The transfer of the compressed gas may continue until the pressure difference between the two vessels is decreased to a desired amount.

Compressed gas is transferred to the third receiving vessel 173 from only the one or more fixed compressed gas storage vessels 111 to increase the pressure of the compressed gas in the third receiving vessel 173 from the initial pressure of the compressed gas in the third receiving vessel 173 to a target pressure for the third receiving vessel 173; the third receiving vessel 173 is refilled from the initial pressure to the target pressure using only compressed gas from the one or more fixed compressed gas storage vessels 111.

The sixth quantity of compressed gas may be transferred from the one or more fixed compressed gas storage vessels 111 to the third receiving vessel 173 when the storage vessels on the mobile compressed gas storage device 100 contain the compressed gas at a pressure less than the initial pressure of compressed gas in the third receiving vessel 173 or when there are no mobile compressed gas storage devices connected to the compressed gas dispensing station 10.

After refilling the third receiving vessel 173 to a target pressure, the third receiving vessel 173 may be disconnected from the compressed gas dispensing station 10.

The ability to dispense compressed gas solely from the one or more fixed compressed gas storage vessels 111 where the one or more fixed compressed gas storage vessels are filled from the liquid storage vessel 150 provides a backup supply of high pressure compressed gas in case the storage vessels on the mobile compressed gas storage device 100 become depleted or when there are no mobile compressed gas storage devices operatively connected to the compressed gas dispensing station 10.

The liquid supply may optionally provide cooling of the compressed gas dispensed from the mobile compressed gas storage device 100, through the use of a heat exchanger, if desired. The heat exchanger may exchange heat between the liquid or cold gas from the liquid storage vessel 150 and the compressed gas from the mobile compressed gas storage device with or without the use of cooling blocks as, for example, described in EP2682664A2 and US8671997B2.

The compressed gas dispensing station 10 may continue to dispense to receiving vessels until the compressed gas is depleted in the mobile compressed gas storage device 100 and the pressure of compressed gas is deemed insufficient to refuel further receiving vessels.

After the mobile compressed gas storage device 100 is depleted to a selected depletion level, the mobile compressed gas storage device may then be disconnected from the compressed gas dispensing station 10 and a second mobile compressed gas storage device 200 may be operatively connected to the compressed gas dispensing station 10. The selected depletion level may be selected depending on the cost of compressed gas provided on the mobile compressed gas storage devices and the cost of liquid for forming the compressed gas, and/or on the availability of product in the various forms, etc. The second mobile compressed gas storage device 200 comprises a plurality of storage vessels 202, 203.

The method may further comprise operatively connecting a fourth receiving vessel 174 of the plurality of receiving vessels to the compressed gas dispensing station 10. When the fourth receiving vessel is operatively connected to the compressed gas dispensing station 10, the fourth receiving vessel 174 contains compressed gas at an initial pressure.

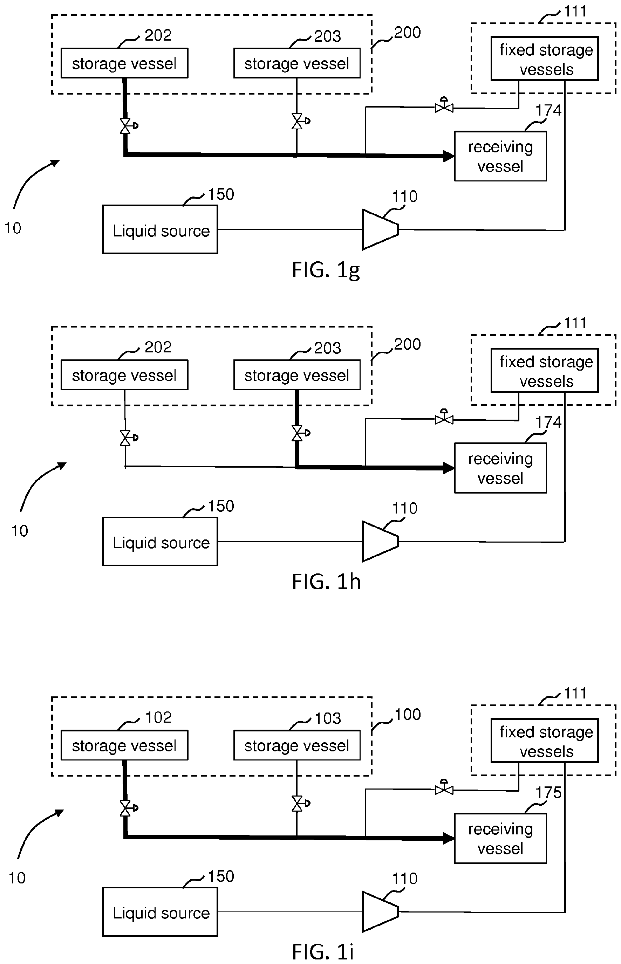

As shown in FIG. 1g, the method may further comprise transferring a seventh quantity of compressed gas from the first storage vessel 202 of the plurality of storage vessels on the second mobile compressed gas storage device 200 to the fourth receiving vessel 174 of the plurality of receiving vessels. The seventh quantity of compressed gas may be transferred using a pressure difference between the compressed gas in the first storage vessel 202 and the compressed gas in the fourth receiving vessel 174 to transfer the seventh quantity of compressed gas without the use of a compressor. The transfer of the compressed gas may continue until the pressure difference between the two vessels is decreased to a desired amount.

As per the cascade dispensing technique, as shown in FIG. 1h, subsequent to the transfer of the seventh quantity of compressed gas, the method may comprise transferring an eighth quantity of compressed gas from a second storage vessel 203 of the plurality of storage vessels on the second mobile compressed gas storage device 200 to the fourth receiving vessel 174. The second storage vessel 203 at the beginning of dispensing to the fourth receiving vessel 174, contains compressed gas at a higher pressure than the first storage vessel 202 at the end of dispensing to the fourth receiving vessel 174. The eighth quantity of compressed gas is transferred using a pressure difference between the compressed gas in the second storage vessel 203 and the compressed gas in the fourth receiving vessel 174 to transfer the eighth quantity of compressed gas without the use of a compressor. The transfer of the compressed gas may continue until the pressure difference between the two vessels is decreased to a desired amount.

The dispensing method may proceed by dispensing additional compressed gas from the second mobile compressed gas storage device 200 to the fourth receiving vessel 174 with corresponding steps using other storage vessels of the plurality of storage vessels on the second mobile compressed gas storage device 200. Dispensing using the cascade filling technique may use any number of the plurality of storage vessels of the second mobile compressed gas storage device 200. Compressed gas is transferred to the fourth receiving vessel 174 from only the second mobile compressed gas storage device 200 to increase the pressure of the compressed gas in the fourth receiving vessel 174 from the initial pressure to a target pressure for the fourth receiving vessel 174; the fourth receiving vessel 174 is refilled to a target pressure using only compressed gas from the second mobile compressed gas storage device 200.

Upon disconnecting the mobile compressed gas storage device 100 from the dispensing station 10, the mobile compressed gas storage device 100 may be transported to a compressed gas supply depot. The mobile compressed gas storage device 100 may be recharged with compressed gas at the compressed gas supply depot and the mobile compressed gas storage device 100 transported back to the dispensing station 10.

The mobile compressed gas storage device 100 may be operatively connected to the compressed gas dispensing station 10 and used again to dispense compressed gas to receiving vessels.

The method may comprise operatively connecting a fifth receiving vessel 175 to the compressed gas dispensing station 10. When the fifth receiving vessel is operatively connected to the compressed gas dispensing station 10, the fifth receiving vessel 175 contains compressed gas at an initial pressure.

As shown in FIG. 1i, the method may further comprise transferring a ninth quantity of compressed gas from the first storage vessel 102 of the plurality of storage vessels on the mobile compressed gas storage device 100 to the fifth receiving vessel 175 of the plurality of receiving vessels. The ninth quantity of compressed gas may be transferred using a pressure difference between the compressed gas in the first storage vessel 102 and the compressed gas in the fifth receiving vessel 175 to transfer the ninth quantity of compressed gas without the use of a compressor. The transfer of the compressed gas may continue until the pressure difference between the two vessels is decreased to a desired amount.

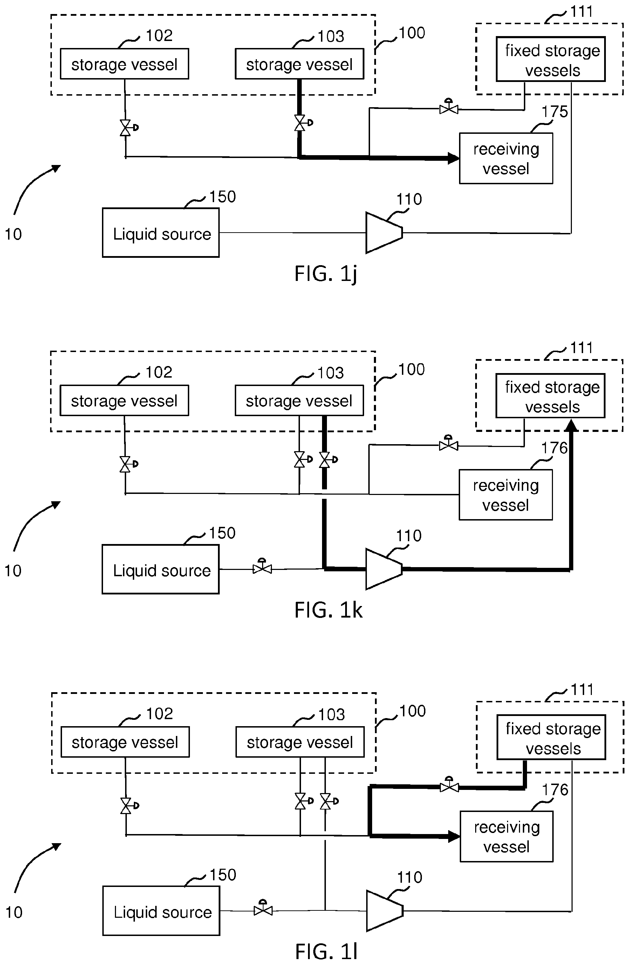

As per the cascade dispensing technique, as shown in FIG. 1j, subsequent to the transfer of the ninth quantity of compressed gas, the method may comprise transferring an tenth quantity of compressed gas from a second storage vessel 103 of the plurality of storage vessels on the mobile compressed gas storage device 100 to the fifth receiving vessel 175. The second storage vessel 103 at the beginning of dispensing to the fifth receiving vessel 175, contains compressed gas at a higher pressure than the first storage vessel 102 at the end of dispensing to the fifth receiving vessel 175. The tenth quantity of compressed gas is transferred using a pressure difference between the compressed gas in the second storage vessel 103 and the compressed gas in the fifth receiving vessel 175 to transfer the tenth quantity of compressed gas without the use of a compressor. The transfer of the compressed gas may continue until the pressure difference between the two vessels is decreased to a desired amount.

The dispensing method may proceed by dispensing additional compressed gas from the mobile compressed gas storage device 100 to the fifth receiving vessel 175 with corresponding steps using other storage vessels of the plurality of storage vessels on the mobile compressed gas storage device 100. Compressed gas is transferred to the fifth receiving vessel 175 from only the mobile compressed gas storage device 100 to increase the pressure of the compressed gas in the fifth receiving vessel 175 from the initial pressure to a target pressure for the fifth receiving vessel 175; the fifth receiving vessel 175 is refilled to a target pressure using only compressed gas from the mobile compressed gas storage device 100.

As shown in FIG. 1k, the method may comprise transferring a quantity of compressed gas from one or more of the of the plurality of storage vessels 102, 103 on the mobile compressed gas storage device 100 to one or more of the fixed compressed gas storage vessels 111 via the fluid mover (110). This could be done when the pressure in the plurality of storage vessels 102, 103 is deemed insufficient to supply the compressed gas to a receiving vessel to a desired target pressure.

Another receiving vessel 176 may be operatively connected to the dispensing station 10. As shown in FIG. 1l, the method may comprise transferring a quantity of compressed gas from one or more of the fixed compressed gas storage vessels 111 to the other receiving vessel 176 using the pressure difference between the compressed gas in the one or more fixed compressed gas storage vessels 111 and the compressed gas in the other receiving vessel 176 to transfer the quantity of compressed gas. The quantity of compressed gas transferred from the one or more of the fixed compressed gas storage vessels 111 to the other receiving vessel 176 comprises at least a portion of the quantity of compressed gas transferred from the one or more of the plurality of storage vessels 102, 103 on the mobile compressed gas storage device 100 to the one or more of the fixed compressed gas storage vessels 111 via the fluid mover 110.

These method steps where compressed gas is transferred from one or more of the plurality of storage vessels 102, 103 on the mobile compressed gas storage device 100 to one or more of the fixed compressed gas storage vessels 111 via the fluid mover and compressed gas subsequently transferred from the one or more fixed compressed gas storage vessels 111 to another receiving tank provides the benefit of improving the utilization of the compressed gas in the plurality of storage vessels 102, 103 prior to the mobile compressed gas storage device 100 needing to be transported to a compressed gas supply depot to be recharged with compressed gas; the plurality of storage vessels on the mobile compressed gas storage device 100 may be depleted more completely before being recharged. This configuration has a synergistic effect in that it has the benefit of not requiring an additional fluid mover to accomplish the transfer of the compressed gas from the mobile compressed gas storage device 100 to the one or more fixed compressed gas storage vessels 111.

## Claims

1. A method for dispensing a compressed gas into a plurality of receiving vessels at a compressed gas dispensing station (10) comprising a mobile compressed gas storage device (100), a liquid storage vessel (150), and one or more fixed compressed gas storage vessels (111), the method comprising:
(a) operatively connecting a first receiving vessel (171) of the plurality of receiving vessels to the compressed gas dispensing station (10), the first receiving vessel (171) containing the compressed gas at an initial pressure;
(b) transferring a first quantity of the compressed gas from a first storage vessel (102) of a plurality of storage vessels on the mobile compressed gas storage device (100) to the first receiving vessel (171) of the plurality of receiving vessels using a pressure difference between the compressed gas in the first storage vessel (102) and the compressed gas in the first receiving vessel (171) to transfer the first quantity of compressed gas;
(c) subsequent to the transfer of the first quantity of compressed gas, transferring a second quantity of the compressed gas from a second storage vessel (103) of the plurality of storage vessels on the mobile compressed gas storage device (100) to the first receiving vessel (171) using a pressure difference between the compressed gas in the second storage vessel (103) and the compressed gas in the first receiving vessel (171) to transfer the second quantity of compressed gas;
(d) wherein the compressed gas is transferred to the first receiving vessel (171) from only the mobile compressed gas storage device (100) to increase the pressure of the compressed gas in the first receiving vessel (171) from the initial pressure to a target pressure for the first receiving vessel and the first receiving vessel (171) is disconnected from the gas dispensing station (10) then;
(e) transferring a first quantity of a liquid from the liquid storage vessel (150) to the one or more fixed compressed gas storage vessels (111) via a fluid mover (110) thereby forming a third quantity of the compressed gas in the one or more fixed compressed gas storage vessels (111);
(f) operatively connecting a second receiving vessel (172) of the plurality of receiving vessels to the compressed gas dispensing station (10);
(g) transferring a fourth quantity of the compressed gas from one or more of the plurality of storage vessels (102, 103) on the mobile compressed gas storage device (100) to the second receiving vessel (172) of the plurality of receiving vessels using a respective pressure difference between each of the one or more of the plurality of storage vessels (102, 103) and the compressed gas in the second receiving vessel (172) to transfer the fourth quantity of compressed gas;
(h) subsequent to the transfer of the fourth quantity of compressed gas, transferring a fifth quantity of the compressed gas from at least one of the one or more fixed compressed gas storage vessels (111) to the second receiving vessel (172) using a pressure difference between the compressed gas in the at least one of the one or more fixed compressed gas storage vessels (111) and the compressed gas in the second receiving vessel (172) to transfer the fifth quantity of compressed gas, wherein the fifth quantity of compressed gas comprises at least a portion of the third quantity of compressed gas;
(i) wherein the fifth quantity of the compressed gas is transferred from the at least one of the one or more fixed compressed gas storage vessels (111) to the second receiving vessel (172) when the pressure of the compressed gas in each and every one of a total number of storage vessels mounted on the mobile compressed gas storage device (100) is determined to be insufficient to provide a target pressure of compressed gas in the second receiving vessel (172);
(j) operatively connecting a third receiving vessel (173) of the plurality of receiving vessels to the compressed gas dispensing station, the third receiving vessel (173) containing the compressed gas at an initial pressure; and
(k) transferring a sixth quantity of the compressed gas from the at least one or another of the one or more fixed compressed gas storage vessels (111) to the third receiving vessel (173) of the plurality of receiving vessels using a pressure difference between the compressed gas in the at least one or the other of the one or more fixed compressed gas storage vessels (111) and the compressed gas in the third receiving vessel (173) to transfer the sixth quantity of compressed gas;
(l) wherein the compressed gas is transferred to the third receiving vessel (173) from only the one or more fixed compressed gas storage vessels (111) to increase the pressure of the compressed gas in the third receiving vessel (173) from the initial pressure of the compressed gas in the third receiving vessel (173) to a target pressure for the third receiving vessel (173).

2. The method of claim 1 wherein the compressed gas is hydrogen.

3. The method of any one of the preceding claims wherein the sixth quantity of the compressed gas is transferred from the one or more fixed compressed gas storage vessels (111) to the third receiving vessel (173) when the storage vessels on the mobile compressed gas storage device (100) each contain the compressed gas at a pressure less than the initial pressure of the compressed gas in the third receiving vessel (173) or when there are no mobile compressed gas storage devices operatively connected to the compressed gas dispensing station (10).

4. The method of any one of claims 1 to 3 wherein the liquid storage vessel (150) is a fixed liquid storage vessel.

5. The method of any one of claims 1 to 3 wherein the liquid storage vessel (150) is a mobile liquid storage vessel.

6. The method of any one of the preceding claims further comprising:
operatively connecting a second mobile compressed gas storage device (200) comprising a plurality of storage vessels to the compressed gas dispensing station (10);
operatively connecting a fourth receiving vessel (174) of the plurality of receiving vessels to the compressed gas dispensing station (10), the fourth receiving vessel (174) containing the compressed gas at an initial pressure;
transferring a seventh quantity of the compressed gas from a first storage vessel (202) of the plurality of storage vessels on the second mobile compressed gas storage device (200) to the fourth receiving vessel (174) of the plurality of receiving vessels using a pressure difference between the compressed gas in the first storage vessel (202) on the second mobile compressed gas storage device and the compressed gas in the fourth receiving vessel (174) to transfer the seventh quantity of compressed gas; and
subsequent to the transfer of the seventh quantity of compressed gas, transferring an eighth quantity of the compressed gas from a second storage vessel (203) of the plurality of storage vessels on the second mobile compressed gas storage device (200) to the fourth receiving vessel (174) using a pressure difference between the compressed gas in the second storage vessel (203) on the second mobile compressed gas storage device and the compressed gas in the fourth receiving vessel (174) to transfer the eighth quantity of compressed gas;
wherein the compressed gas is transferred to the fourth receiving vessel (174) from only the second mobile compressed gas storage device (200) to increase the pressure of the compressed gas in the fourth receiving vessel from the initial pressure to a target pressure for the fourth receiving vessel.

7. The method of claim 6 further comprising:
transporting the mobile compressed gas storage device (100) to a compressed gas supply depot after the compressed gas on the mobile compressed gas storage device (100) has been depleted to a selected depletion level;
recharging the mobile compressed gas storage device (100) with the compressed gas at the compressed gas supply depot;
transporting the mobile compressed gas storage device (100) to the compressed gas dispensing station;
operatively connecting the mobile compressed gas storage device (100) to the compressed gas dispensing station;
operatively connecting a fifth receiving vessel (175) of the plurality of receiving vessels to the compressed gas dispensing station, the fifth receiving vessel (175) containing the compressed gas at an initial pressure;
transferring a ninth quantity of the compressed gas from the first storage vessel (102) of the plurality of storage vessels on the mobile compressed gas storage device (100) to the fifth receiving vessel (175) of the plurality of receiving vessels using a pressure difference between the compressed gas in the first storage vessel (102) on the mobile compressed gas storage device and the compressed gas in the fifth receiving vessel (175) to transfer the ninth quantity of compressed gas; and
subsequent to the transfer of the ninth quantity of compressed gas, transferring an tenth quantity of the compressed gas from the second storage vessel (103) of the plurality of storage vessels on the mobile compressed gas storage device (100) to the fifth receiving vessel (175) using a pressure difference between the compressed gas in the second storage vessel (103) on the mobile compressed gas storage device (100) and the compressed gas in the fifth receiving vessel (175) to transfer the tenth quantity of compressed gas;
wherein the compressed gas is transferred to the fifth receiving vessel (175) from only the mobile compressed gas storage device (100) to increase the pressure of the compressed gas in the fifth receiving vessel from the initial pressure to a target pressure for the fifth receiving vessel.

8. The method of any one of the preceding claims wherein the first receiving vessel (171) is refilled to the target pressure using only compressed gas from the mobile compressed gas storage device (100).

9. The method of any one of the preceding claims wherein the third receiving vessel (173) is refilled to the target pressure using only compressed gas from the one or more fixed compressed gas storage vessels (111).

10. The method of any one of the preceding claims wherein the fluid mover (110) receives the first quantity of liquid from the liquid storage vessel (150) in liquid form.

11. The method of the preceding claim wherein the fluid mover (110) discharges a first quantity of effluent as a liquid or a supercritical fluid, the first quantity of effluent formed from the first quantity of liquid, the method further comprising heating the first quantity of effluent from the fluid mover (110) to form the third quantity of the compressed gas.

12. The method of any one of the preceding claims further comprising:
transferring a quantity of compressed gas from one or more of the of the plurality of storage vessels (102, 103) on the mobile compressed gas storage device (100) to one or more of the fixed compressed gas storage vessels (111) via the fluid mover (110).

13. The method of the preceding claim further comprising:
operatively connecting another receiving vessel (176) of the plurality of receiving vessels to the compressed gas dispensing station (10); and
transferring a quantity of compressed gas from one or more of the fixed compressed gas storage vessels (111) to the other receiving vessel (176) using the pressure difference between the compressed gas in the one or more fixed compressed gas storage vessels (111) and the compressed gas in the other receiving vessel (176) to transfer the quantity of compressed gas, wherein the quantity of compressed gas transferred from the one or more of the fixed compressed gas storage vessels (111) to the other receiving vessel (176) comprises at least a portion of the quantity of compressed gas transferred from the one or more of the plurality of storage vessels (102, 103) on the mobile compressed gas storage device (100) to the one or more of the fixed compressed gas storage vessels (111) via the fluid mover (110).

## Patentansprüche

1. Verfahren zur Abgabe eines komprimierten Gases in eine Vielzahl von Aufnahmebehältern an einer Abgabestation (10) für komprimiertes Gas, mit einer mobilen Bevorratungsvorrichtung (100) für komprimiertes Gas, einem Flüssigkeitvorratsbehälter (150), und einem oder mehreren ortsfeste Vorratsbehälter (111) für komprimiertes Gas, wobei das Verfahren umfasst:
(a) betriebsbereites Verbinden eines ersten Aufnahmebehälters (171) der Vielzahl von Aufnahmebehältern mit der Abgabestation (10) für komprimiertes Gas, wobei der erste Aufnahmebehälter (171) das komprimierte Gas bei einem Ausgangsdruck enthält;
(b) Übertragen einer ersten Menge des komprimierten Gases aus einem ersten Vorratsbehälter (102) der Vielzahl der Vorratsbehälter an der mobilen Bevorratungsvorrichtung (100) für komprimiertes Gas in den ersten Aufnahmebehälter (171) der Vielzahl von Aufnahmebehältern bei Nutzung eines Druckunterschieds zwischen dem komprimierten Gas in dem ersten Vorratsbehälter (102) und dem komprimierten Gas in dem ersten Aufnahmebehälter (171), um die erste Menge komprimierten Gases zu übertragen;
(c) nach der Übertragung der ersten Menge komprimierten Gases Übertragen einer zweiten Menge des komprimierten Gases aus einem zweiten Vorratsbehälter (103) der Vielzahl der Vorratsbehälter an der mobilen Bevorratungsvorrichtung (100) für komprimiertes Gas in den ersten Aufnahmebehälter (171) bei Nutzung eines Druckunterschieds zwischen dem komprimierten Gas in dem zweiten Vorratsbehälter (103) und dem komprimierten Gas in dem ersten Aufnahmebehälter (171) um die zweite Menge komprimierten Gases zu übertragen;
(d) wobei das komprimierte Gas nur von der mobilen Bevorratungsvorrichtung (100) für komprimiertes Gas in den ersten Aufnahmebehälter (171) übertragen wird, um den Druck des komprimierten Gases in dem ersten Aufnahmebehälter (171) von dem Ausgangsdruck auf einen Zieldruck für den ersten Aufnahmebehälter zu erhöhen, und der erste Aufnahmebehälter (171) anschließend von der Gasabgabestation (10) getrennt wird;
(e) Übertragen einer erstem Menge einer Flüssigkeit von dem Flüssigkeitvorratsbehälter (150) zu dem einen oder den mehreren ortsfesten Vorratsbehältern (111) für komprimiertes Gas mittels eines Fluidmovers (110), dabei Bilden einer dritten Menge von dem komprimierten Gas in dem einen oder den mehreren der ortsfesten Vorratsbehälter (111) für komprimiertes Gas;
(f) betriebsbereites Verbinden eines zweiten Aufnahmebehälters (172) der Vielzahl von Aufnahmebehältern mit der Abgabestation (10) für komprimiertes Gas;
(g) Übertragen einer vierten Menge des komprimierten Gases aus einem oder mehreren der Vielzahl von Vorratsbehältern (102, 103) an der mobilen Bevorratungsvorrichtung (100) für komprimiertes Gas in den zweiten Aufnahmebehälter (172) der Vielzahl von Aufnahmebehältern bei Nutzung eines entsprechenden Druckunterschieds zwischen dem einen oder den mehreren Vorratsbehälter (102, 103) und dem komprimierten Gas in dem zweiten ersten Aufnahmebehälter (172), um die vierte Menge komprimierten Gases zu übertragen;
(h) nach der Übertragung der vierten Menge komprimierten Gases Übertragen einer fünften Menge des komprimierten Gases von wenigstens dem einen oder den mehreren der ortsfesten Vorratsbehälter (111) für komprimiertes Gas in den zweiten Aufnahmebehälter (172) bei Nutzung eines Druckunterschieds zwischen dem komprimierten Gas in dem wenigstens einen oder den mehreren ortsfesten Vorratsbehältern (111) für komprimiertes Gas und dem komprimierten Gas in dem zweiten Aufnahmebehälter (172) um die fünfte Menge komprimierten Gases zu übertragen, wobei die fünfte Menge komprimierten Gases wenigstens einen Teil der dritten Menge komprimierten Gases umfasst;
(i) wobei die fünfte Menge des komprimierten Gases von dem wenigstens einen oder den mehreren ortsfesten Vorratsbehältern (111) für komprimiertes Gas in den zweite Aufnahmebehälter (172) übertragen wird, wenn der Druck des komprimierten Gases in jedem einzelnen der Gesamtzahl von Vorratsbehältern, die an der mobilen Bevorratungsvorrichtung (100) für komprimiertes Gas befestigt sind, als unzureichend bestimmt wird, um einen Zieldruck komprimierten Gases in dem zweiten Aufnahmebehälter (172) bereitzustellen;
(j) betriebsbereites Verbinden eines dritten Aufnahmebehälters (173) der Vielzahl von Aufnahmebehältern mit der Abgabestation für das komprimierte Gas, wobei der dritte Aufnahmebehälter (173) das komprimierte Gas bei einem Ausgangsdruck enthält; und
(k) Übertragen einer sechsten Menge des komprimierten Gases von wenigstens einem oder einem anderen der einen oder mehreren ortsfesten Vorratsbehälter (111) für komprimiertes Gas in den dritten Aufnahmebehälter (173) der Vielzahl von Aufnahmebehältern bei Nutzung eines Druckunterschieds zwischen dem komprimierten Gas in dem wenigstens einen oder anderen der einen oder mehreren ortsfesten Vorratsbehälter (111) für komprimiertes Gas und dem komprimierten Gas in dem dritten Aufnahmebehälter (173), um die sechste Menge komprimierten Gases zu übertragen;
(l) wobei das komprimierte Gas nur von dem einen oder den mehreren ortsfesten Vorratsbehältern (111) für komprimiertes Gas in den dritten Aufnahmebehälter (173) übertragen wird, um den Druck des komprimierten Gases in dem dritten Aufnahmebehälter (173) von dem Ausgangsdruck des komprimierten Gases in dem dritten Aufnahmebehälter (173) auf einen Zieldruck für den dritten Aufnahmebehälter (173) zu erhöhen.

2. Verfahren nach Anspruch1, wobei das komprimierte Gas Wasserstoff ist.

3. Verfahren nach einem der vorhergehenden Ansprüche, wobei die sechste Menge des komprimierten Gases von dem einen oder den mehreren ortsfesten Vorratsbehältern (111) für komprimiertes Gas in den dritten Aufnahmebehälter (173) übertragen wird, wenn jeder der Vorratsbehälter an der mobilen Bevorratungsvorrichtung (100) für komprimiertes Gas das komprimiertes Gas bei dem Druck kleiner als der Ausgangsdruck des komprimierten Gases in dem dritten Aufnahmebehälter (173) enthält oder wenn keine mobilen Bevorratungsvorrichtungen für komprimiertes Gas betriebsbereit mit der Abgabestation (10) für komprimiertes Gas verbunden sind.

4. Verfahren nach einem der Ansprüche 1 bis 3, wobei der Flüssigkeitvorratsbehälter (150) eine ortsfester Flüssigkeitvorratsbehälter ist.

5. Verfahren nach einem der Ansprüche 1 bis 3, wobei der Flüssigkeitvorratsbehälter (150) ein mobiler Flüssigkeitvorratsbehälter ist.

6. Verfahren nach einem der vorhergehenden Ansprüche ferner umfassend:
betriebsbereites Verbinden einer zweiten mobilen Bevorratungsvorrichtung (200) für komprimiertes Gas mit einer Vielzahl von Vorratsbehältern mit der Abgabestation (10) für komprimiertes Gas;
betriebsbereites Verbinden eines vierten Aufnahmebehälters (174) der Vielzahl von Aufnahmebehältern mit der Abgabestation (10) für komprimiertes Gas, wobei der vierte Aufnahmebehälter (174) das komprimierte Gas bei einem Ausgangsdruck enthält;
Übertragen einer siebten Menge des komprimierten Gases von dem ersten Vorratsbehälter (202) der Vielzahl von Vorratsbehältern an der zweiten mobilen Bevorratungsvorrichtung (200) für komprimiertes Gas mit dem vierten Aufnahmebehälter (174) der Vielzahl von Aufnahmebehältern bei Nutzung einer Druckdifferenz zwischen dem komprimierten Gas in dem ersten Vorratsbehälter (202) und dem zweiten mobilen Bevorratungsvorrichtung für komprimiertes Gas und dem komprimierten Gas in dem vierten Aufnahmebehälter (174), um die siebte Menge komprimierten Gases zu übertragen; und
nach der Übertragung der siebten Menge komprimierten Gases Übertragen einer achten Menge des komprimierten Gases von einem zweiten Vorratsbehälter (203) der Vielzahl von Vorratsbehältern an der zweiten mobilen Bevorratungsvorrichtung (200) für komprimiertes Gas zu dem vierten Aufnahmebehälter (174) bei Nutzung eines Druckunterschieds zwischen dem komprimierten Gas in dem zweiten Vorratsbehälter (203) an der zweiten mobilen Bevorratungsvorrichtung für komprimiertes Gas und dem komprimierten Gas in dem vierten Aufnahmebehälter (174) um die achte Menge komprimierten Gases zu übertragen;
wobei das komprimierte Gas nur von der zweiten mobilen Bevorratungsvorrichtung (200) für komprimiertes Gas in den vierten Aufnahmebehälter (174) übertragen wird, um den Druck des komprimierten Gases in dem vierten Aufnahmebehälter von dem Ausgangsdruck auf einen Zieldruck für den vierten Aufnahmebehälter zu erhöhen.

7. Verfahren nach Anspruch 6, weiterhin umfassend:
Transportieren der mobilen Bevorratungsvorrichtung (100) für komprimiertes Gas zu einem Versorgungsdepot für komprimiertes Gas, nachdem das komprimierte Gas des mobilen Bevorratungsvorrichtung (100) auf ein ausgewähltes Absenkungslevel abgesenkt wurde;
Auffüllen der mobilen Bevorratungsvorrichtung (100) für komprimiertes Gas mit dem komprimierten Gas an dem Versorgungsdepot für das komprimierte Gas;
Transportieren der mobilen Bevorratungsvorrichtung (100) zu der Abgabestation für komprimiertes Gas:
betriebsbereites Verbinden der mobilen Bevorratungsvorrichtung (100) für komprimiertes Gas mit der Abgabestation für komprimiertes Gas;
betriebsbereites Verbinden eines fünften Aufnahmebehälters (175) der Vielzahl von Aufnahmebehältern mit der Abgabestation für komprimiertes Gas, wobei der fünfte Aufnahmebehälter (175) das komprimierte Gas bei einem Ausgangsdruck enthält;
Übertragen einer neunten Menge des komprimierten Gases von dem ersten Vorratsbehälter (102) der Vielzahl von Vorratsbehältern an der ersten mobilen Bevorratungsvorrichtung (100) für komprimiertes Gas zu dem fünften Aufnahmebehälter (175) der Vielzahl von Aufnahmebehältern bei Nutzung eines Druckunterschieds zwischen dem komprimierten Gas in dem ersten Vorratsbehälter (102) an der mobilen Bevorratungsvorrichtung für komprimiertes Gas und dem komprimierten Gas in dem fünften Aufnahmebehälter (175), um die neunte Menge komprimierten Gases zu übermitteln; und
nach der Übertragung der neunten Menge komprimierten Gases Übertragen einer zehnten Menge des komprimierten Gases von dem zweiten Vorratsbehälter (103) der Vielzahl von Vorratsbehältern an der mobilen Bevorratungsvorrichtung (100) für komprimiertes Gas zu dem fünften Aufnahmebehälter (175) bei Nutzung eines Druckunterschieds zwischen dem komprimierten Gas in dem zweiten Vorratsbehälter (103) an der mobilen Bevorratungsvorrichtung (100) für komprimiertes Gas und dem komprimierten Gas in dem fünften Aufnahmebehälter (175), um die zehnte Menge zu übertragen;
wobei das komprimierte Gas nur von der mobilen Bevorratungsvorrichtung (100) für komprimiertes Gas zu dem fünften Aufnahmebehälter (175) übermittelt wird, um den Druck des komprimierten Gases in dem fünften Aufnahmebehälter von dem Ausgangsdruck auf einen Zieldruck für den fünften Aufnahmebehälter zu erhöhen.

8. Verfahren nach einem der vorhergehenden Ansprüche, wobei der erste Aufnahmebehälter (171) nur mit komprimierten Gas aus der mobilen Bevorratungsvorrichtung (100) für komprimiertes Gas auf den Zieldruck aufgefüllt wird.

9. Verfahren nach einem der vorhergehenden Ansprüche, wobei der dritte Aufnahmebehälter (173) nur mit komprimiertem Gas aus dem einem oder den mehreren ortsfesten Vorratsbehältern (111) für komprimiertes Gas auf den Zieldruck aufgefüllt wird.

10. Verfahren nach einem der vorhergehenden Ansprüche, wobei der Fluidmover (110) die erste Menge von Flüssigkeit von dem Flüssigkeitvorratsbehälter (150) in flüssiger Form erhält.

11. Verfahren nach dem vorhergehenden Anspruch, wobei der Fluidmover (110) eine erste Menge von Abwasser als eine Flüssigkeit oder eine überkritische Flüssigkeit abgibt, wobei die erste Menge von Abwasser aus der ersten Menge von Flüssigkeit gebildet wird, wobei das Verfahren ferner umfasst: Aufheizen der ersten Menge von Abwasser vom Fluidmover (110), um die dritte Menge des komprimierten Gases zu bilden.

12. Verfahren nach einem der vorhergehenden Ansprüche weiterhin umfassend:
Übertragen einer Menge von komprimierten Gas von einem oder mehreren der Vielzahl von Vorratsbehältern (102, 103) an der mobilen Bevorratungsvorrichtung (100) für komprimiertes Gas über den Fluidmover (110) zu einem oder mehreren der ortsfesten Vorratsbehälter (111) für komprimiertes Gas.

13. Verfahren nach dem vorhergehenden Anspruch ferner umfassend:
betriebsbereites Verbinden eines weiteren Aufnahmebehälters (176) der Vielzahl von Aufnahmebehältern mit der Abgabestation (10) für komprimiertes Gas; und Übertragen einer Menge komprimierten Gases von einem oder mehreren der ortsfesten Verratsbehälter (111) für komprimiertes Gas zu dem weiteren Aufnahmebehälter (176) bei Nutzung des Druckunterschieds zwischen dem komprimierten Gas in dem einen oder den mehreren ortsfesten Vorratsbehältern (111) für komprimiertes Gas und dem komprimierten Gas in dem weiteren Aufnahmebehälter (176), um die Menge komprimierten Gases zu übertragen, wobei die Menge des von dem einen oder den mehreren ortsfesten Vorratsbehältern (111) für komprimiertes Gas zu dem weiteren Aufnahmebehälter (176) übertragenen komprimierten Gases wenigstens einen Teil der Menge komprimierten Gases umfasst, das über den Fluidmover (110) von dem einen oder den mehreren der Vorratsbehälter (102, 103) an der mobilen Bevorratungsvorrichtung (100) für komprimiertes Gas zu dem einen oder den mehreren ortsfesten Vorratsbehältern (111) für komprimiertes Gas übertragen wird.

## Revendications

1. Un procédé de distribution d'un gaz comprimé dans plusieurs réservoirs récepteurs à une station de distribution de gaz comprimé (10) comprenant un dispositif mobile de stockage du gaz comprimé (100), un réservoir de stockage de liquide (150) et un ou plusieurs réservoirs fixes de stockage d'air comprimé (111), le procédé comprenant :
(a) le raccordement opératoire d'un premier réservoir récepteur (171) des plusieurs réservoirs récepteurs à la station de distribution de gaz comprimé (10), le premier réservoir récepteur (171) contenant le gaz comprimé à une pression initiale ;
(b) le transfert d'une première quantité de gaz comprimé d'un premier réservoir de stockage (102) des plusieurs réservoirs de stockage sur le dispositif mobile de stockage de gaz comprimé (100) vers le premier réservoir récepteur (171) des plusieurs réservoirs récepteurs en utilisant une différence de pression entre le gaz comprimé dans le premier réservoir de stockage (102) et le gaz comprimé dans le premier réservoir récepteur (171) pour transférer la première quantité de gaz comprimé ;
(c) après le transfert de la première quantité de gaz comprimé, le transfert d'une deuxième quantité du gaz comprimé d'un deuxième réservoir de stockage (103) des plusieurs réservoirs de stockage sur le dispositif mobile de stockage de gaz comprimé (100) vers le premier réservoir récepteur (171) en utilisant une différence de pression entre le gaz comprimé dans le deuxième réservoir de stockage (103) et le gaz comprimé dans le premier réservoir récepteur (171) pour transférer la deuxième quantité de gaz comprimé ;
(d) dans lequel le gaz comprimé est transféré vers le premier réservoir récepteur (171) à partir seulement du dispositif mobile de stockage de gaz comprimé (100) pour augmenter la pression du gaz comprimé dans le premier réservoir récepteur (171) à partir de la pression initiale jusqu'à une pression cible pour le premier réservoir récepteur et le premier réservoir récepteur (171) est débranché alors de la station de distribution du gaz (10) ;
(e) le transfert d'une première quantité d'un liquide du réservoir de stockage de liquide (150) vers les un ou plusieurs réservoirs fixes de stockage de gaz comprimé (111) par le biais d'un déplaceur de fluide (110), formant à cette occasion une troisième quantité de gaz comprimé dans un ou plusieurs réservoirs fixes de stockage de gaz comprimé (111);
(f) le raccordement opératoire d'un deuxième réservoir récepteur (172) des plusieurs réservoirs récepteurs à la station de distribution de gaz comprimé (10) ;
(g) le transfert d'une quatrième quantité de gaz comprimé d'un ou plusieurs réservoirs de stockage (102, 103) sur le dispositif mobile de stockage de gaz comprimé (100) vers le deuxième réservoir récepteur (172) des plusieurs réservoirs récepteurs en utilisant une différence de pression respective entre chacun des un ou plusieurs réservoirs de stockage (102, 103) et le gaz comprimé dans le deuxième réservoir récepteur (172) pour transférer la quatrième quantité de gaz comprimé;
(h) après le transfert de la quatrième quantité de gaz comprimé, le transfert d'une cinquième quantité du gaz comprimé à partir d'au moins un des un ou plusieurs réservoirs fixes de stockage de gaz comprimé (111) vers le deuxième récipient récepteur (172) en utilisant une différence de pression entre le gaz comprimé dans au moins un des un ou plusieurs réservoirs fixes de stockage de gaz comprimé (111) et le gaz comprimé dans le deuxième réservoir récepteur (172) pour transférer la cinquième quantité de gaz comprimé, la cinquième quantité de gaz comprimé comprenant au moins une partie de la troisième quantité de gaz comprimé ;
(i) dans lequel la cinquième quantité de gaz comprimé est transférée d'au moins un des un ou plusieurs réservoirs fixes de stockage de gaz comprimé (111) vers le deuxième réservoir récepteur (172) lorsque la pression du gaz comprimé dans chacun d'un nombre total de réservoirs de stockage montés sur le dispositif mobile de stockage de gaz comprimé (100) s'avère insuffisant pour fournir une pression cible de gaz comprimé dans le deuxième réservoir récepteur (172) ;
(j) le raccordement opératoire d'un troisième réservoir récepteur (173) de plusieurs réservoirs récepteurs vers la station de distribution de gaz comprimé, le troisième réservoir récepteur (173) contenant le gaz comprimé à une pression initiale ; et
(k) le transfert d'une sixième quantité de gaz comprimé à partir d'au moins l'un ou l'autre des un ou plusieurs réservoirs fixes de stockage de gaz comprimé (111) vers le troisième réservoir récepteur (173) des plusieurs réservoirs récepteurs en utilisant une différence de pression entre le gaz comprimé dans au moins l'un ou l'autre des un ou plusieurs réservoirs fixes de stockage de gaz comprimé (111) et le gaz comprimé dans le troisième réservoir récepteur (173) pour transférer la sixième quantité de gaz comprimé ;
(l) le gaz comprimé étant transféré vers le troisième réservoir récepteur (173) à partir, seulement, des un ou plusieurs réservoirs fixes de stockage de gaz comprimé (111) pour augmenter la pression du gaz comprimé dans le troisième réservoir récepteur (173) à partir de la pression initiale du gaz comprimé dans le troisième réservoir récepteur (173) jusqu'à une pression cible pour le troisième réservoir récepteur (173).

2. Le procédé selon la revendication 1, dans lequel le gaz comprimé est l'hydrogène.

3. Le procédé selon l'une des revendications précédentes, dans lequel la sixième quantité de gaz comprimé est transférée des un ou plusieurs réservoirs fixes de stockage de gaz comprimé (111) vers le troisième récipient récepteur (173) lorsque les réservoirs de stockage sur le dispositif mobile de stockage de gaz comprimé (100) contiennent chacun le gaz comprimé à une pression inférieure à la pression initiale du gaz comprimé dans le troisième réservoir récepteur (173) ou lorsqu'il n'y a pas de dispositif mobile de stockage de gaz comprimé raccordé de manière opératoire à la station de distribution du gaz comprimé (10).

4. Le procédé selon l'une des revendications 1 à 3, dans lequel le réservoir de stockage de liquide (150) est un réservoir fixe de stockage de liquide.

5. Le procédé selon l'une des revendications 1 à 3, dans lequel le réservoir de stockage de liquide (150) est un réservoir mobile de stockage de liquide.

6. Le procédé selon l'une des revendications précédentes comprenant par ailleurs :
le raccordement opératoire d'un deuxième dispositif mobile de stockage de gaz comprimé (200) comprenant plusieurs réservoirs de stockage à la station de distribution de gaz comprimé (10) ;
le raccordement opératoire d'un quatrième réservoir récepteur (174) des plusieurs réservoirs récepteurs à la station de distribution de gaz comprimé (10), le quatrième réservoir récepteur (174) contenant le gaz comprimé à une pression initiale ;
le transfert d'une septième quantité de gaz comprimé d'un premier réservoir de stockage (202) des plusieurs réservoirs de stockage sur le deuxième dispositif mobile de stockage de gaz comprimé (200) vers le quatrième réservoir récepteur (174) des plusieurs réservoirs récepteurs en utilisant une différence de pression entre le gaz comprimé dans le premier réservoir de stockage (202) sur le deuxième dispositif mobile de stockage de gaz comprimé et le gaz comprimé dans le quatrième réservoir récepteur (174) pour transférer la septième quantité de gaz comprimé ; et
après le transfert de la septième quantité de gaz comprimé, le transfert d'une huitième quantité de gaz comprimé d'un deuxième réservoir de stockage (203) des plusieurs réservoirs de stockage sur le deuxième dispositif mobile de stockage de gaz comprimé (200) vers le quatrième réservoir récepteur (174) en utilisant une différence de pression entre le gaz comprimé dans le deuxième réservoir de stockage (203) sur le deuxième dispositif mobile de stockage de gaz comprimé et le gaz comprimé dans le quatrième réservoir récepteur (174) pour transférer la huitième quantité de gaz comprimé ;
dans lequel le gaz comprimé est transféré vers le quatrième réservoir récepteur (174) à partir, seulement, du deuxième dispositif mobile de stockage de gaz comprimé (200) pour augmenter la pression du gaz comprimé dans le quatrième réservoir récepteur à partir de la pression initiale vers une pression cible pour le quatrième réservoir récepteur.

7. Procédé selon la revendication 6 comprenant par ailleurs :
le transport du dispositif mobile de stockage de gaz comprimé (100) vers un dépôt d'approvisionnement en gaz comprimé après que le gaz comprimé sur le dispositif mobile de stockage de gaz comprimé (100) a été épuisé jusqu'à un niveau choisi d'épuisement ;
la recharge du dispositif mobile de stockage de gaz comprimé (100) avec le gaz comprimé au dépôt d'approvisionnement en gaz comprimé ; le transport du dispositif mobile de stockage de gaz comprimé (100) vers la station de distribution de gaz comprimé ;
le raccordement opératoire du dispositif mobile de stockage de gaz comprimé (100) à la station de distribution de gaz comprimé ;
le raccordement opératoire d'un cinquième réservoir récepteur (175) des plusieurs réservoirs récepteurs à la station de distribution de gaz comprimé, le cinquième réservoir récepteur (175) contenant le gaz comprimé à une pression initiale ;
le transfert d'une neuvième quantité du gaz comprimé du premier réservoir de stockage (102) des plusieurs réservoirs de stockage sur le dispositif mobile de stockage du gaz comprimé (100) vers le cinquième réservoir récepteur (175) des plusieurs réservoirs récepteurs en utilisant une différence de pression entre le gaz comprimé dans le premier réservoir de stockage (102) sur le dispositif mobile de stockage de gaz comprimé et le gaz comprimé dans le cinquième réservoir récepteur (175) pour transférer la neuvième quantité de gaz comprimé ; et
après le transfert de la neuvième quantité de gaz comprimé, le transfert d'une dixième quantité du gaz comprimé à partir du deuxième réservoir de stockage (103) des plusieurs réservoirs de stockage sur le dispositif mobile de stockage de gaz comprimé (100) vers le cinquième réservoir récepteur (175) en utilisant une différence de pression entre le gaz comprimé dans le deuxième réservoir de stockage (103) sur le dispositif mobile de stockage de gaz comprimé (100) et le gaz comprimé dans le cinquième réservoir récepteur (175) pour transférer la dixième quantité de gaz comprimé ;
le gaz comprimé étant transféré vers le cinquième réservoir récepteur (175) à partir, seulement, du dispositif mobile de stockage de gaz comprimé (100) pour augmenter la pression du gaz comprimé dans le cinquième réservoir récepteur à partir de la pression initiale jusqu'à une pression cible pour le cinquième réservoir récepteur.

8. Le procédé selon l'une des revendications précédentes dans lequel le premier réservoir récepteur (171) est réapprovisionné jusqu'à la pression cible en utilisant uniquement du gaz comprimé provenant du dispositif mobile de stockage de gaz comprimé (100).

9. Procédé selon l'une des revendications précédentes, dans lequel le troisième réservoir récepteur (173) est réapprovisionné jusqu'à la pression cible en utilisant uniquement le gaz comprimé provenant d'un ou plusieurs réservoirs fixes de stockage de gaz comprimé (111).

10. Procédé selon l'une des revendications précédentes, dans lequel le déplaceur de fluide (110) reçoit la première quantité de liquide à partir du réservoir de stockage de liquide (150) sous forme liquide.

11. Le procédé selon la revendication précédente, dans lequel le déplaceur de fluide (110) décharge une première quantité d'effluent sous forme de liquide ou de fluide supercritique, la première quantité d'effluent formé à partir de la première quantité de liquide, le procédé comprenant par ailleurs le chauffage de la première quantité d'effluent provenant du déplaceur de fluide (110) pour former la troisième quantité de gaz comprimé.

12. Procédé selon l'une des revendications précédentes comprenant par ailleurs:
le transfert d'une quantité de gaz comprimé à partir d'un ou plusieurs des plusieurs réservoirs de stockage (102, 103) sur le dispositif mobile de stockage de gaz comprimé (100) vers un ou plusieurs des réservoirs fixes de stockage de gaz comprimé (111) par l'intermédiaire du déplaceur de fluide (110).

13. Procédé selon la revendication précédente comprenant par ailleurs : le raccordement opératoire d'un autre réservoir récepteur (176) parmi les plusieurs réservoirs récepteurs à la station de distribution de gaz comprimé (10) ; et le transfert d'une quantité de gaz comprimé d'un ou plusieurs des réservoirs fixes de stockage de gaz comprimé (111) vers l'autre réservoir récepteur (176) en utilisant la différence de pression entre le gaz comprimé dans un ou plusieurs des réservoirs fixes de stockage de gaz comprimé (111) et le gaz comprimé dans l'autre réservoir récepteur (176) pour transférer la quantité de gaz comprimé, la quantité de gaz comprimé transféré d'un ou plusieurs des réservoirs fixes de stockage de gaz comprimé (111) vers l'autre réservoir récepteur (176) comprenant au moins une partie de la quantité de gaz comprimé transférée d'un ou plusieurs des plusieurs réservoirs de stockage (102, 103) sur le dispositif mobile de stockage de gaz comprimé (100) vers un ou plusieurs des réservoirs fixes de stockage de gaz comprimé (111) par l'intermédiaire du déplaceur de fluide (110).
